# EUROPEAN PATENT APPLICATION

(11) **EP 1 917 882 A1**
(43) Date of publication of application: **07.05.2008**
(21) Application number: 07021350.9
(22) Date of filing: 01.11.2007
(51) Int. Cl.: A45F 5/00

(54) **Attaching arrangement for an electronic device**

(30) Priority: 01.11.2006 FI 20060456 U
(71) Applicant: Typetek Oy, 02171 Espoo (FI)
(72) Inventor: Rahikka, Pasi, 08200 Lohja (FI)
(74) Representative: Järveläinen, Pertti Tauno Juhani

(57) **Abstract**

An attaching or suspension arrangement for a small electronic device (1), characterized in that an attaching or gripping surface (13) based on mechanical attachment or gripping is arranged on the device's (1) outer surface whereby the device may be attached or suspended onto the underlay by pressing and released therefrom by pulling.

## Description

### Field of the invention

The present invention relates to an attaching or suspension arrangement for an electronic device, specially a small electronic device. A small electronic device may be a communicator (a mobile phone) or another handheld telecommunication device or a PDA or also another electronic device which can be attached or suspended on an underlay as an the wall, in the roof, in the car's etc.

### Prior art

Nowadays a mobile phone is arranged in cars and other vehicles in a separate car holder which is specially designed for that device by threading it from above into the space reserved for it.

In the same way a mobile phone can also be suspended into a belt with a separate holder which is secured into the belt either by threading that holder into the belt or alternatively by using different kind of securing means, as clips etc.

A disadvantage with these known fastening means is the space they need and also the uncomfortableness in use. A major disadvantage with the prior art securing means is the fact that they are device-specific i.e. they are as far as the size and design are concerned only designed for specific mark and model.

### Summary of the invention

The object of the present invention is to avoid the disadvantages of the prior art and to achieve a totally new kind of a attaching/suspension arrangement. In the invented arrangement an attaching or gripping surface is arranged in the device and especially into its outer surface based on mechanical attaching operating principally as a burr i.e. the surface is attached into the underlay with mechanic attachment due to mechanical attaching capability of the surface in the attaching surface without any adhesion based on magnetism or adhesive (glue).

The device can by means of this mechanical attaching surface be pressed into the underlay into which it is attached self-attachedly without any specific mechanical locking means or clamps and so that it can be released therefrom easily by pulling.

The attaching capability can be improved by arranging correspondingly a mechanical attaching surface in the underlay.

The attaching surface of the device itself or also of the underlay can be a piece of attaching tape (gripping tape) which can then be glued or otherwise adhered into the e.g. device's bottom or back cover and the underlay.

The invented attaching or suspension arrangement is very simple, economic and easy to use.

The characteristic features of the invention are in detail presented in the enclosed claims.

### Short description of the drawings

In the following the invention is described in more detail by means of an example by reference to the enclosed drawings wherein
Figure 1 presents an invented mobile phone attaching arrangement, and
Figures 2a and 2b present application of the invented mobile phone attaching arrangement in a car.

### Description of the embodiments of the invention

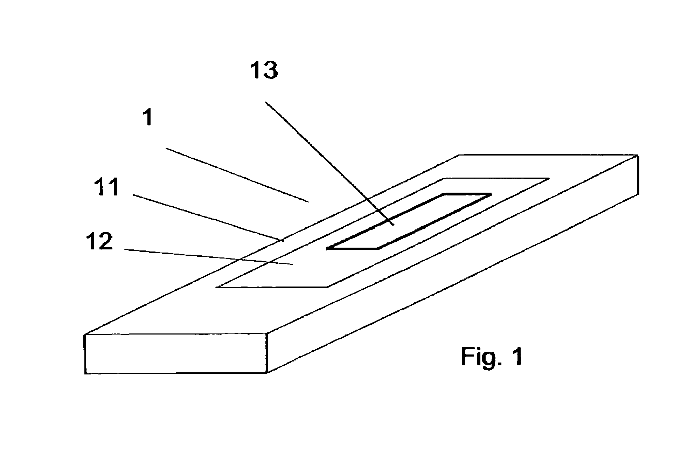

Figure 1 presents a mobile phone 1 obliquely from behind as a perspective view. A back cover 11 and a battery hatch cover 12 therein of the mobile phone 1 are shown in Fig. 1. An attaching tape means 13 with a very rough, fluffy attaching tape surface based on mechanical attachment is adhered to the battery hatch cover by gluing.

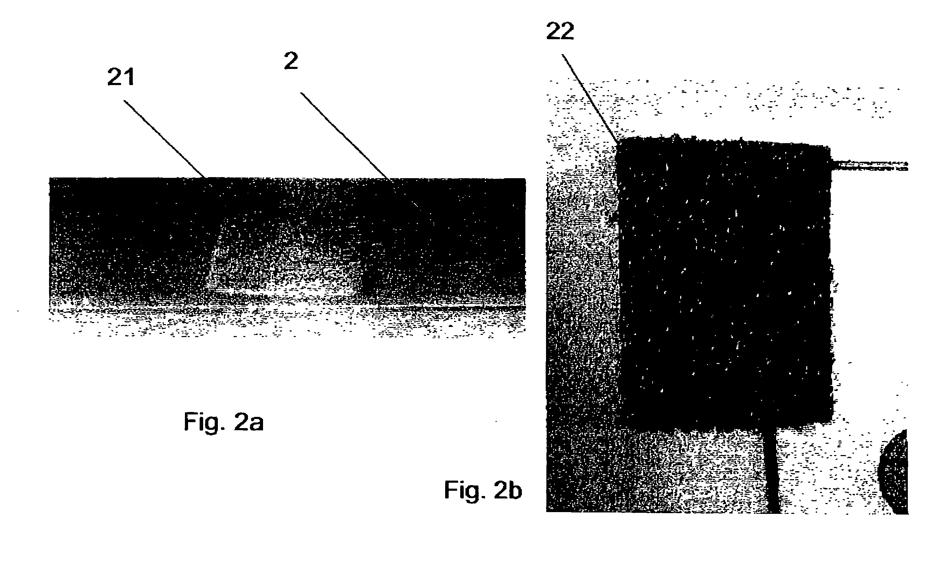

This kind of a mobile phone can be attached or suspended e.g. according to Figs. 2a to 2b to the meter board 2 of a car or its front wall with an attaching tape means 21, 22 being adhered to this meter board in a corresponding place.

The mobile phone 1 may with help of this mechanical attaching surface be pressed into the meter board operating as an underlay and it will be attached thereto without any specific mechanical locking means or clamps and so that it can be released therefrom easily by pulling.

It is clear for a skilled person that different embodiments of the present invention are not limited to the above-described example but they may be varied within the scope of the claims presented in the following. The device may be also another kind of an electronic device as a fire detector which can according to the present invention be simply attached e.g. to the roof. In the mobile phone use the underlay may be e.g. a coat.

## Claims

1. An attaching or suspension arrangement for a small electronic device (1), **characterized in that** an attaching or gripping surface (13) based on mechanical attachment or gripping is arranged on the device's (1) outer surface whereby the device may be attached or suspended onto the underlay by pressing and released therefrom by pulling.

2. The arrangement according to claim 1, **characterized in that** in order to improve the attaching or gripping capability correspondingly an attaching or gripping surface is arranged on the underlay.

3. The arrangement according to claim 1, **characterized in that** attaching or gripping tape means (13) or alike with a rough attaching surface is adhered onto the device.

4. The arrangement according to claim 1, **characterized in that** the device is a telecommunication device with a battery hatch and wherein the attaching surface is arranged on the battery hatch cover.

5. The arrangement according to claim 1 or 2, **characterized in that** at least one of the attaching surfaces is fluffy.
